# EUROPEAN PATENT SPECIFICATION

(11) **EP 4 442 408 B1**
(45) Date of publication and mention of the grant of the patent: **16.07.2025**
(21) Application number: 23167177.7
(22) Date of filing: 06.04.2023
(51) Int. Cl.: B25J 9/16, G05B 13/04, B21D 1/06, B23P 9/04

(54) **A SYSTEM AND A METHOD FOR MACHINE-ASSISTED STRAIGHTENING OF HARDENED METAL WORKPIECES**
SYSTEM UND VERFAHREN ZUM MASCHINENUNTERSTÜTZTEN RICHTEN VON GEHÄRTETEN METALLWERKSTÜCKEN
SYSTÈME ET PROCÉDÉ DE REDRESSAGE ASSISTÉ PAR MACHINE DE PIÈCES MÉTALLIQUES DURCIES

(43) Date of publication of application: 09.10.2024
(73) Proprietor: The University Of Maribor - Faculty Of Mechanical Engineering, 2000 Maribor (SI)
(72) Inventor: Persak, Tadej, 9243 Mala Nedelja (SI); Hernavs, Jernej, 3000 Celje (SI); Klancnik, Simon, 2381 Podgorje pri Slovenj Gradcu (SI)
(74) Representative: Patentni Biro AF d.o.o.

(56) References cited:
- US-A1- 2014 007 394
- US-A1- 2017 066 024
- US-A1- 2019 163 162

## Description

### Field of the invention

The present invention belongs to the field of engineering, more precisely to the field of devices and methods for processing workpieces exhibiting high hardness. The invention relates to a system and a method for machine-assisted straightening of metal workpieces with hard hardness.

### Background of the invention and the technical problem

Steel heat treatment is a frequently used methodology in an industry used to improve mechanical properties of metal workpieces. These mechanical properties of metal workpieces include hardness, plasticity, resilience and resistance to material weakening (Fa-jun, "Heat treatment process and defect analysis of the aviation piston engine crankshaft," ed: IEEE, 2014, pp. 1055-1058). Particularly important application is increasing hardness. As a result of the heat treatment one can improve the workpiece's hardness, but this process also frequently causes geometrical deformations, thus creating local material deformations, which cause residual stress (Sonar et al., 2018; doi: 10.1016/j.promfg.2018.02.016). The latter is impossible to be effectively controlled, which consequently leads to a geometrically deformed workpiece with high hardness. Most commonly, the workpieces are geometrically deformed due to said residual stress, and/or loads, which are creating due to different expansions of individual crystal structures in the material, thus also leading to differences in volumes of crystal structures that is a third cause for geometric deformations (Zrilić et al., Nastanek zaostalih napetosti in metode za merjenje zaostalih napetosti. 2012; Totten, Steel heat treatment: metallurgy and technologies, 2nd ed. ed. Taylor & Francis, 2007).

To achieve the planned functionality of quenched workpieces, post-process straightening is commonly required. Some of the material toughness is always sacrificed when raising its hardness, which makes conventional straightening approaches with bending inefficient. Mitigating this effect, the industry's usual action is additional heat treatment to ensure better workpiece geometry, which costs extra time and provides limited results. Re-heating further causes a negative environmental footprint. Another used approach is to straighten the quenched workpiece manually by hand. This is done by inducing surface deformations onto the workpiece, which is an especially demanding and sensitive operation that can be performed only by experienced workers. Hand straightening is far from optimal, because such straightening procedure relies on the informal knowledge of the workers - their experience and feel. That kind of work is very demanding and quite dangerous, as it bears negative health risks to the worker.

The technical problem addressed by the present invention is to design a system and a method, which will enable at least partially automized and controlled straightening of metal workpieces with high hardness. It is required that the invention does not need presence of an experienced skilled person with informal knowledge described above. Furthermore, it is the aim of the invention to provide a method for straightening that will require minimal straightening strikes for inducing surface plastic deformations.

### Prior art

Straightening of metal workpieces with high hardness, approximately around 60 HRC is a demanding process. Material with such hardness cannot be straightened with classical and widely used bending, as the material is destructed (Guo and Liu, 2002, doi: 10.1115/1.1413775; Zhang et al., 2018, 10.1177/1687814018799158; and US4306435).

One of possibilities is to straighten the workpieces with a process combining heat treatment and bending (Dutta et al., "Electromagnetic-Force-Assisted Bending and Straightening of AH36 Steel Strip by Laser Irradiation," Lasers in Manufacturing & Materials Processing, vol. 5, no. 3, p. 201, 09// 2018.; Dutta et al., "Magnetic-Force-Assisted Straightening of Bent Mild Steel Strip by Laser Irradiation," Lasers in Manufacturing & Materials Processing, vol. 4, no. 4, p. 206, 12// 2017.). According to this solution the workpiece is mounted at one end, while a magnet arranged to generate straightening fore is installed on the other end. The area of bending is heated using a laser. This method is suitable for thinner workpieces. Furthermore, additional heat is applied to the workpiece, which negatively affects material structure and even lowers material hardness.

Straightening methods using rolling (Chen et al., Applied Mechanics and Materials, vol. 470, pp. 330-334, 2014) and bending [(Zhang et al., doi: 10.1177/1687814018799158; Hu et al., "Improvement on straightness of metal bar based on straightening strokedeflection model," Science in China. Series E: Technological Sciences, vol. 52, no. 7, p. 1866, 07, 2009) are also known in the literature. These methods are not suitable for workpieces with high hardness and toughness, as material is quickly damaged due to the small difference between the yield strength and the tensile strength.

Workpieces with high hardness may be straightened using a gas burner. This can only be performed by experienced persons, who use a manual burner to heat the workpiece at a particular area, thus straightening the workpiece. The person performing this process has to be experienced and has to possess informal knowledge. Furthermore, additional heat is applied, which is not wanted (Lacalle et al., "Influence of the Flame Straightening Process on Microstructural, Mechanical and Fracture Properties of S235 JR, S460 ML and S690 QL Structural Steels," Experimental Mechanics, vol. 53, no. 6, p. 893, 07// 2013).

According to the patent application US 4450707 a method for straightening low ductile materials is known, said method being based on impacting the workpiece surface. By applying strikes on the surface of the workpiece plastic deformation occurs at the strike area. This leads to area extension (Schulze et al., 2016, doi: 10.1016/j.cirp.2016.05.005) and consequently workpiece straightening. Due to complexity of the method for straightening using strikes, this can only be performed manually by a skilled person possessing informal knowledge (US 4226111). Each strike leads to deterioration of mechanical properties of the workpiece and hardening of the material therefore the aim of such method is to achieve desired results with minimal number of strikes. US 2014/007394 A1 discloses a system and method for machine-assisted straightening of metal workpieces, whereby straightening strikes are performed by a manipulator.

### Description of the solution to the technical problem

The present invention addresses the disadvantages of known solutions and represents an upgrade of existing systems and methods for straightening metal workpieces with high hardness. The technical problem is solved as defined in independent claims, while the preferred embodiments are defined in the dependent claims.

The system according to the invention is defined in claim 1.

The system for preparation of optimized straightening strategy is essentially an algorithm supported by the predictive model, wherein the system tests various combinations of strikes (number, position, rotation, force) and evaluates them based on the predictive model. Each suggested solution of the optimization strategy is evaluated with the predictive model as described above. The most optimal solution is then used for controlling the manipulator to straighten the workpiece. Planning(designing) of the straightening strategy can be achieved with different optimization techniques, such as evolution algorithms, swarm intelligence, etc. as known to the skilled person.

When the predictive model is suitably taught and the learning phase is concluded, the predictive model is arranged to predict changes in the geometry of workpiece upon a particular straightening impact. In this setting, the system performs:
i. Scanning of the initial geometry of the workpiece
ii. Based on obtain geometry in previous step, the system for preparation of optimal straightening strategy searches for strikes that are able to straighten the workpiece,
iii. The manipulator performs the straightening impact(s) in the required position, rotation, sequence, straightening force and/or number.

There are two preferred options for the step iii., namely:
- based on the workpiece shape a straightening strategy is prepared and performed in full (no connection to the straightening process in real time), and
- based on the workpiece shape a straightening strategy is prepared, wherein during straightening the actual change of the shape after strikes is tracked and analysed, wherein based on these changes the straightening strategy is adjusted in real time.

The manipulator used in performing the strikes may be any suitable tool, preferably a robot, which movements and strikes can be suitably controlled using a controller, microcontroller, processor or any similar device. The tool of the manipulator or the robot used to perform strikes may be made from various materials, usually having a higher hardness than the workpiece, and can take any suitable shape, for example of a ball or a hammer, depending on the treated workpiece.

Data for preparation and development of predictive models and system testing are:
- Variables:
   ∘ Data describing geometry and/or shape of the workpiece, preferably a 3D-model of the workpiece prior to surface plastic deformation induced by straightening strikes
   ∘ Locations of signal strikes that do not lead to surface plastic deformation,
   ∘ acoustic responses during strikes which do not induce surface plastic deformation,
   ∘ Locations, orientations and forces of strikes that lead to surface plastic deformation,
   ∘ acoustic responses during strikes which induce surface plastic deformation,
- Responses/states:
   ∘ Data describing geometry and/or shape of the workpiece, preferably a 3D model of the workpiece after each strike that plastically deforms its surface.
Training sets are provided to obtain a predictive model that will be arranged to predict the induced geometrical shape change after each defined impact. It is important to note that the system and the method according to the invention are not limited to one particular material of the workpiece, but can be any as long as the training sets are provided for each required material. Hence, in case of a new material for the workpiece, separate training sets are provided and thus a new predictive model as well as straightening strategy is prepared for the new material.

Once the system is fully established and trained, a method for straightening a workpiece as defined in claim 13 can be automatically performed in an industrial setting.

The so performed straightening method enables efficient and controlled straightening of hardened metal workpieces without presence of an experienced skilled person with informal knowledge as described above.

The invention will be described in further detail based on exemplary embodiments and figures, which show:
- Figure 1: an overview of the system according to the invention
- Figure 2: a diagram of experiments
- Figure 3: The principle of straightening hardened workpieces by applying surface deformations
- Figure 4: schematic view of the training phase for the predictive model
- Figure 5: Schematic depiction of the use of the system according to the invention
- Figure 6: Form changes of a hardened workpiece due to added strikes

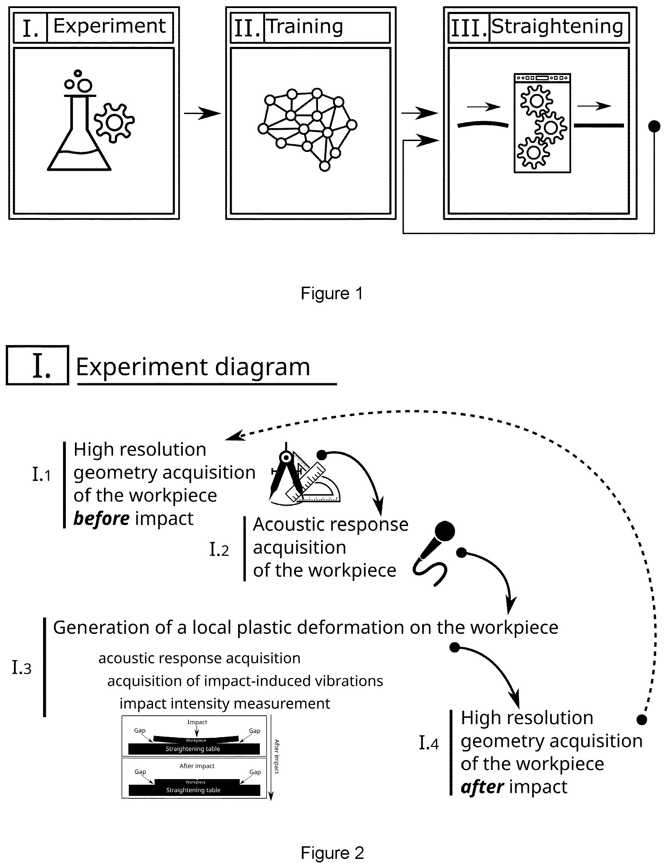

Figure 1 shows an overview of the system, wherein it is first subjected to experiments in order to provide training sets for the predictive algorithm. Once the predictive model is taught, it can be applied in straightening systems for evaluation of proposed solutions.

Figure 2 shows a diagram of experiments, wherein geometry of the workpiece before the strike is obtained (step I1), acoustic response during strikes not inducing surface deformations is obtained (step I2), and then acoustic responses are acquired during each strike and geometry data are acquired after each strike, said strike inducing deformations on the surface of the workpiece (step I3). Finally, geometry of the workpiece is analysed again to see the effect of strikes (steps I4). All steps are repeated for each new impact. These experiments are performed in order to prepare a novel learning database for machine learning of the system. Once experiments are completed, machine learning takes place. When done, the system is ready to be used.

The system according to a possible embodiment arranged for training the predictive model comprises:
- a 3D scanner for obtaining workpiece geometry,
- a manipulator having a tool for performing straightening strikes, wherein the manipulator and/or the tool is arranged to apply at least one strike on the surface of the treated workpiece installed on a suitable surface, and wherein the straightening strikes are controlled by their
   ∘ position (x,y coordinates)
   ∘ orientation (rotation angle) of the tool
   ∘ force,
- a device for capturing acoustic response, said device comprising at least a microphone, after each straightening strike, wherein the acoustic response is sampled in the moment of the straightening strike and optionally in the moment of signal strikes that do not cause any deformations on the surface of the workpiece, wherein said signal strikes may be used to gather geometry of the workpiece and the device for obtaining workpiece geometry is not needed anymore,
- a predictive model, which is arranged to predict changes in the geometry of workpiece upon a particular straightening strike and is taught in the following manner: the model connects
   ∘ inputs:
      ▪ Workpiece geometry before the strike,
      ▪ number, force, location, orientation and/or sequence applied straightening strikes, wherein between strikes location and the orientation of the strike may be changed,
      ▪ optionally acoustic response generated at each strike,
   ∘ with outputs:
      ▪ change of the workpiece geometry, said changed being detected with said device for obtaining workpiece geometry, preferably the 3D scanner,
      wherein the predictive model is prepared using deep neural network, and is trained on the basis of sets of controlled experiments comprising different materials of the workpiece, various numbers of strikes, different forces, locations, orientations (angles) and strike sequences, while at the same time acoustic response and geometrical changes of the workpiece are tracked;
- a system for preparation of optimized straightening strategy to be performed by the manipulator and supported by the predictive model, wherein an optimization of the strategy aims to find at least optimal number of strikes, their locations (x, y axis), rotation of the tool, and/or possibly strike force, strike sequence, shape of the tool, etc. and wherein the final aim is to achieve as geometrically straight workpiece as possible with the lowest number of strikes,
wherein the predictive model and the preparation of the optimized straightening strategy are a part of operations performed by a computer and/or a processor, a microcontroller or a similar element of the computer or system, respectively.

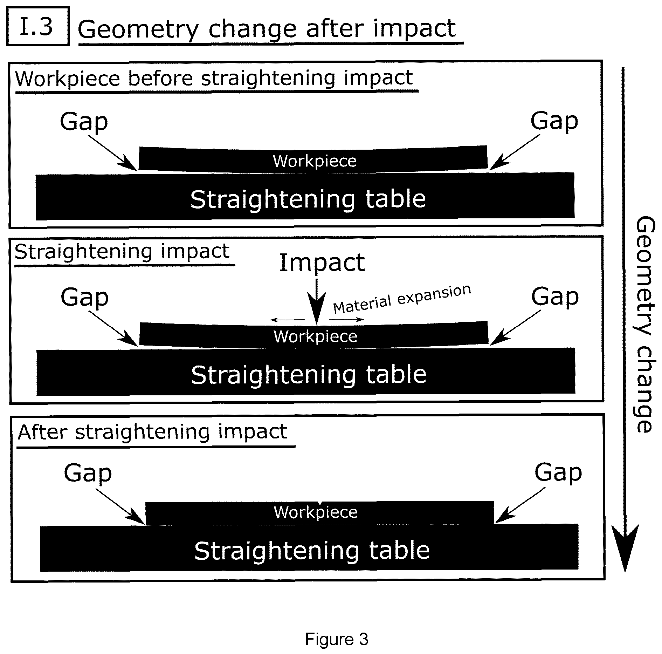

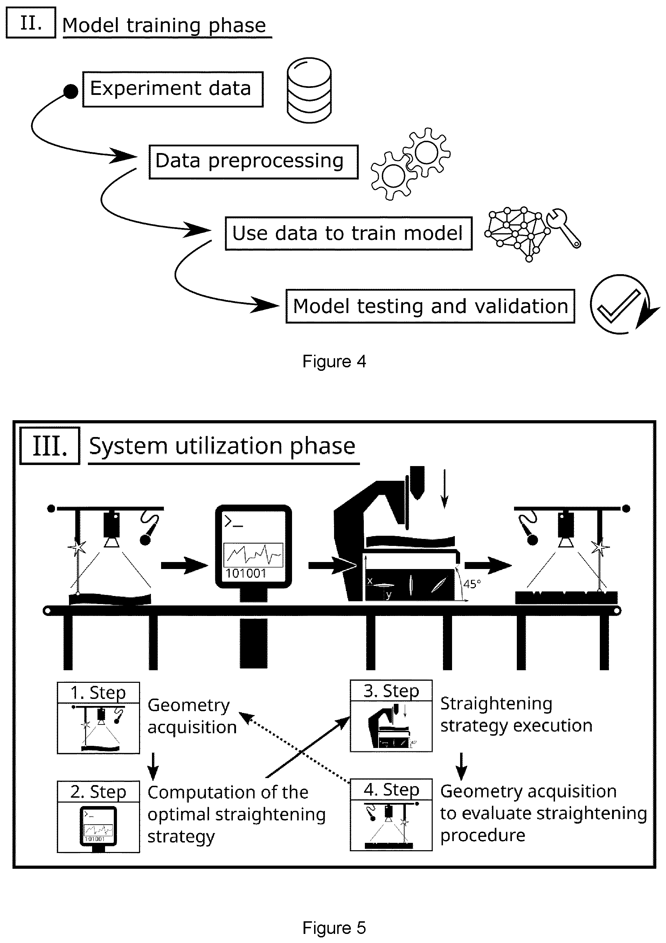

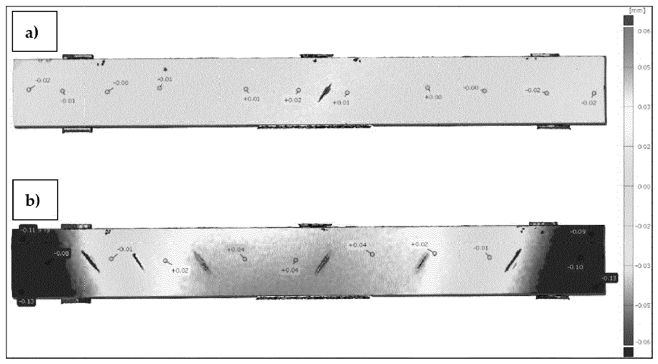

Figure 3 depicts an exemplary workpiece set on a straightening table, wherein the said workpiece is curved, i.e., there are gaps on both ends. Upon application of an strike, the material expands and later on straightens. Consequently, the previously existing gaps are now closed. The final workpiece has a groove or a similar pattern at the strike site, however, this does not significantly affect its properties. Such information is used for predicitve model training, wherein Figure 4 is a schematic view of the training phase including the above-described steps.

When the predictive model is suitably taught and the learning phase is concluded, the system comprises the following:
- A device for obtaining geometry of the workpiece,
- predictive model arranged to predict changes in the geometry of workpiece upon a particular straightening strike,
- a manipulator arranged to perform straightening impact(s).
In this setting, the system performs the following steps:
i. Scanning of the initial geometry of the workpiece
ii. Based on obtained geometry in previous step, the optimizing algorithm searches for strikes that are able to straighten the workpiece, and the predictive model evaluates the proposed strikes, wherein these search and evaluation steps are repeated for each strike or strike sequence, until the optimal solution is detected,
iii. The manipulator performs the straightening impact(s) in the required position, rotation, sequence, straightening force and/or number.

There are two preferred options for the step iii., namely:
- based on the workpiece shape a straightening strategy is prepared and performed in full (no connection to the straightening process in real time), and
- based on the workpiece shape a straightening strategy is prepared, wherein during straightening the actual change of the shape after strikes is tracked and analysed, wherein based on these changes the straightening strategy is adjusted in real time.

Figure 5 depicts an exemplary utilization of the system, wherein the workpiece set on a straightening table. Upon analysis of suitable or optimal straightening strikes, the latter are applied to the workpiece, wherein the material expands and later on straightens. Consequently, the workpiece is straight and its geometry is checked. The final workpiece has several grooves at the strike site.

Figure 6(a) shows the change in form of the workpiece after the one strike. Observing the color map, just one strike caused form changes large enough to be detected with our 3D scanning equipment. From the measurement marks on the workpiece, the location of the strike is convex by 0.02 mm and the workpiece was lowered by 0.02 mm at the ends. Additional strikes were added in Figure 6(b). It can be seen that the center bulges out even more, but, at the same time, from the blue color on the edges, it can be seen how the orientation of the punch affects the change in the form of the workpiece. Namely, the workpiece has bent parallel to the orientation of the strike.

## Claims

1. A system for machine-assisted straightening of hardened metal workpieces, said system comprising:
- a device for obtaining the shape of a workpiece, which may be any suitable device enabling geometric measurements,
- a manipulator having a tool for performing straightening strikes, wherein the manipulator and/or the tool is arranged to apply at least one strike on the surface of the workpiece, the workpiece set on a suitable surface or a straightening table, and wherein the straightening strikes are controlled by their
∘ position (x,y coordinates),
∘ orientation (rotation angle) of the tool, and/or
∘ force,
- a predictive model, which is arranged to predict changes in the geometry of the workpiece upon a particular straightening impact, said predictive model being prepared using artificial intelligence or any other technique of mathematical modelling, wherein the predictive model is trained with training sets provided by controlled experiments comprising different materials of the workpiece, various numbers of strikes, different forces, locations, orientations and strike sequences, during which the acoustic response and geometrical changes of the workpiece are tracked;
- an optimization system for preparing an optimized straightening strategy to be performed by the manipulator, wherein an optimization of the straightening strategy aims to find at least an optimal number of strikes, their locations, sequence, straightening force and/or rotation of the tool, whereby each suggested solution of the optimization is evaluated using the predictive model,
wherein the predictive model and the optimized straightening strategy are a part of operations performed by a computer and/or a processor, a microcontroller or a similar element of the computer or system.

2. The system according to claim 1, wherein the system further comprises a device for gathering acoustic response after each straightening strike, said device comprising at least a microphone, wherein the acoustic response is sampled in the moment of the straightening strike and optionally in the moment of signal strikes that do not cause any deformations on the surface of the workpiece.

3. The system according to claim 1 or claim 2, wherein the predictive model connects
- inputs:
∘ workpiece shape before the strike,
∘ number, force, location, orientation and sequence applied strikes, wherein between strikes said parameters of the strike may be changed,
∘ optionally acoustic response generated at each strike,
- with outputs:
∘ change of the workpiece geometry, said changed being detected with said device for obtaining workpiece geometry with a device for precise geometry measurements, preferably the 3D scanner.

4. The system according to any of the previous claims, wherein data for preparation of training sets for machine learning and system testing are:
- Variables:
∘ 3D-model of the workpiece prior to surface plastic deformation induced by straightening strikes
∘ locations of signal strikes that do not lead to surface plastic deformation,
∘ acoustic responses after strikes which do not induce surface plastic deformation,
∘ locations, orientations and forces of strikes that lead to surface plastic deformation,
∘ acoustic responses after strikes which induce surface plastic deformation,
- Responses/states:
∘ 3D model of the workpiece after each strike that plastically deforms its surface.

5. The system according to any of the previous claims, wherein the predictive model is prepared using a deep neural network.

6. The system according to any of the previous claims, wherein the straightening strategy is implemented with different optimization techniques, such as evolution algorithms and/or swarm intelligence.

7. The system according to any of the previous claims, wherein the device for obtaining the shape of the workpiece is a 3D scanner or a laser profile meter.

8. The system according to any of the previous claims, wherein the manipulator is a robot.

9. The system according to claim 2, wherein acoustic signals during straightening strikes are used to gather geometry of the workpiece and the device for gathering acoustic response functions as the device for obtaining workpiece geometry.

10. The system according to any of the previous claims, wherein the manipulator is controlled using a controller, microcontroller, processor or any similar device.

11. The system according to any of the previous claims, wherein the manipulator has a tool arranged to perform strikes, said tool being made from various materials, usually having a higher hardness than the workpiece, and having any suitable shape, for example of a ball or a hammer.

12. The system according to any of the previous claims, wherein the predictive model is configured to operate in one of the following modes:
- Straightening strikes and the shape of the workpiece before the straightening strikes are input into the predictive model for prediction of a new shape of the workpiece after the straightening strike, or
- Straightening strikes and the acoustic responses during the straightening strikes and the shape of the workpiece prior the straightening strikes are input into the predictive model for prediction of a new shape of the workpiece after the straightening strike.

13. A method for machine-assisted straightening of hardened metal workpieces using the system according to any of the preceding claims, said method comprising at least the following steps:
- obtaining the shape of a workpiece and information about the material of the workpiece,
- preparing an optimized straightening strategy using the optimization system in accordance with information about the material and geometry of the workpiece, wherein the predictive model evaluates the strikes proposed in the strategy and wherein the evaluation is repeated for each strike or strike sequence, until the optimal solution is found,
- performing one or more straightening strikes determined in the previous step, and
- optionally checking the shape of the workpiece after the one or more strikes.

14. The method according to claim 13, wherein
- based on the shape of the workpiece a straightening strategy is prepared and performed in full, or
- based on the shape of the workpiece a straightening strategy is prepared, wherein during straightening the actual change of the shape after strikes is tracked and analysed, wherein based on these changes the straightening strategy is adjusted in real time.

## Patentansprüche

1. System zum maschinengestützten Geraderichten von Werkstücken aus gehärtetem Metall, wobei das System Folgendes umfasst:
- eine Vorrichtung zum Erhalten der Form eines Werkstücks, bei der es sich um jede geeignete Vorrichtung handeln kann, die geometrische Messungen ermöglicht,
- einen Manipulator mit einem Werkzeug zum Durchführen von Richtschlägen, wobei der Manipulator und/oder das Werkzeug angeordnet sind, um mindestens einen Schlag auf die Oberfläche des Werkstücks auszuüben, wobei das Werkstück auf einer geeigneten Oberfläche oder einem Richttisch liegt, und wobei die Richtschläge durch ihre
∘ Position (X-, Y-Koordinaten),
∘ Ausrichtung (Drehwinkel) des Werkzeugs, und/oder
∘ Kraft gesteuert werden,
- ein Vorhersagemodell, das angeordnet ist, um Änderungen in der Geometrie des Werkstücks bei einem besonderen Richtstoß vorherzusagen, wobei das Vorhersagemodell unter Verwendung künstlicher Intelligenz oder einer anderen Technik der mathematischen Modellierung vorbereitet wird und das Vorhersagemodell mit Trainingssätzen trainiert wird, die durch gesteuerte Experimente bereitgestellt werden, die unterschiedliche Materialien des Werkstücks, verschiedene Anzahlen von Schlägen, unterschiedliche Kräfte, Positionen, Ausrichtungen und Schlagfolgen umfassen, während der die akustische Reaktion und die geometrischen Änderungen des Werkstücks verfolgt werden,
- ein Optimierungssystem zum Vorbereiten einer optimierten Richtstrategie, die vom Manipulator durchgeführt werden soll, wobei eine Optimierung der Richtstrategie darauf abzielt, mindestens eine optimale Anzahl von Schlägen, ihren Positionen, ihrer Reihenfolge, Richtkraft und/oder Drehung des Werkzeugs zu finden, wobei jede vorgeschlagene Lösung der Optimierung unter Verwendung des Vorhersagemodells bewertet wird,
wobei das Vorhersagemodell und die optimierte Richtstrategie Teil von Vorgängen sind, die von einem Computer und/oder einem Prozessor, einem Mikrocontroller oder einem ähnlichen Element des Computers oder Systems durchgeführt werden.

2. Das System nach Anspruch 1, wobei das System ferner eine Vorrichtung zum Erfassen der akustischen Reaktion nach jedem Richtschlag umfasst, wobei die Vorrichtung mindestens ein Mikrofon umfasst, wobei die akustische Reaktion im Moment des Richtschlags und optional im Moment von Signalschlägen, die keine Verformungen auf der Oberfläche des Werkstücks verursachen, abgetastet wird.

3. Das System nach Anspruch 1 oder Anspruch 2, wobei das Vorhersagemodell Eingaben
- verbindet:
∘ Werkstückform vor dem Schlag,
∘ Anzahl, Kraft, Position, Ausrichtung und Reihenfolge der angewendeten Schläge, wobei die Schlagparameter zwischen den Schlägen geändert werden können,
∘ optional eine akustische Reaktion bei jedem Schlag,
- mit Ausgaben:
∘ Änderung der Werkstückgeometrie, wobei diese Änderung mit der Vorrichtung zum Erhalten der Werkstückgeometrie mit einer Vorrichtung zur präzisen Geometriemessung, vorzugsweise dem 3D-Scanner, erkannt wird.

4. Das System nach einem der vorstehenden Ansprüche, wobei die Daten zur Vorbereitung von Trainingssätzen für maschinelles Lernen und Systemtests Folgendes umfassen:
- Variablen:
∘ 3D-Modell des Werkstücks vor der durch Richtschläge verursachten plastischen Oberflächenverformung,
∘ Positionen von Signalschlägen, die nicht zu plastischer Oberflächenverformung führen,
∘ akustische Reaktionen nach Stößen, die keine plastische Oberflächenverformung hervorrufen,
∘ Positionen, Ausrichtungen und Kräfte von Stößen, die zu plastischer Oberflächenverformung führen,
∘ akustische Reaktionen nach Stößen, die plastische Oberflächenverformung hervorrufen,
- Reaktionen/Zustände:
∘ 3D-Modell des Werkstücks nach jedem Schlag, der seine Oberfläche plastisch verformt.

5. Das System nach einem der vorstehenden Ansprüche, wobei das Vorhersagemodell unter Verwendung eines tiefen neuronalen Netzes vorbereitet wird.

6. Das System nach einem der vorstehenden Ansprüche, wobei die Richtstrategie mit unterschiedlichen Optimierungstechniken, wie Evolutionsalgorithmen und/oder Schwarmintelligenz, implementiert wird.

7. Das System nach einem der vorstehenden Ansprüche, wobei die Vorrichtung zum Erhalten der Form des Werkstücks ein 3D-Scanner oder ein Laserprofilmesser ist.

8. Das System nach einem der vorstehenden Ansprüche, wobei der Manipulator ein Roboter ist.

9. Das System nach Anspruch 2, wobei akustische Signale während Richtschlägen verwendet werden, um die Geometrie des Werkstücks zu erfassen, und die Vorrichtung zum Erfassen akustischer Reaktionen als Vorrichtung zum Erhalten der Werkstückgeometrie fungiert.

10. Das System nach einem der vorstehenden Ansprüche, wobei der Manipulator unter Verwendung einer Steuerung, eines Mikrocontrollers, eines Prozessors oder einer ähnlichen Vorrichtung gesteuert wird.

11. Das System nach einem der vorstehenden Ansprüche, wobei der Manipulator ein Werkzeug aufweist, das zum Durchführen von Schlägen angeordnet ist, wobei das Werkzeug aus verschiedenen Materialien hergestellt ist, üblicherweise eine höhere Härte als das Werkstück aufweist und jede geeignete Form aufweist, beispielsweise die einer Kugel oder eines Hammers.

12. Das System nach einem der vorstehenden Ansprüche, wobei das Vorhersagemodell konfiguriert ist, um in einem der folgenden Betriebsmodi zu arbeiten:
- Richtschläge und die Form des Werkstücks vor den Richtschlägen werden in das Vorhersagemodell eingegeben, um eine neue Form des Werkstücks nach dem Richtschlag vorherzusagen, oder
- Richtschläge und die akustischen Reaktionen während der Richtschläge und die Form des Werkstücks vor den Richtschlägen werden in das Vorhersagemodell eingegeben, um eine neue Form des Werkstücks nach dem Richtschlag vorherzusagen.

13. Verfahren zum maschinengestützten Geraderichten gehärteter Metallwerkstücke unter Verwendung des Systems nach einem der vorstehenden Ansprüche, wobei das Verfahren mindestens die folgenden Schritte umfasst:
- Erhalten der Form eines Werkstücks und von Informationen über das Material des Werkstücks,
- Vorbereiten einer optimierten Richtstrategie unter Verwendung des Optimierungssystems gemäß Informationen über das Material und die Geometrie des Werkstücks, wobei das Vorhersagemodell die in der Strategie vorgeschlagenen Schläge auswertet, und wobei die Auswertung für jeden Schlag oder jede Schlagfolge wiederholt wird, bis die optimale Lösung gefunden ist,
- Durchführen eines oder mehrerer im vorherigen Schritt bestimmter Richtschläge, und
- optional Überprüfen der Form des Werkstücks nach einem oder mehreren Schlägen.

14. Das Verfahren nach Anspruch 13, wobei
- basierend auf der Form des Werkstücks eine Richtstrategie vorbereitet und vollständig durchgeführt wird oder
- basierend auf der Form des Werkstücks eine Richtstrategie vorbereitet wird, wobei während des Richtens die tatsächliche Änderung der Form nach Schlägen verfolgt und analysiert wird, wobei basierend auf diesen Änderungen die Richtstrategie in Echtzeit angepasst wird.

## Revendications

1. Système pour le redressement assisté par machine de pièces à usiner en métal durci, ledit système comprenant :
- un appareil qui détermine la forme de la pièce à usiner, qui peut être tout appareil approprié permettant des mesures géométriques,
- un engin manipulateur doté d'un outil destiné à effectuer des frappes de redressement, le manipulateur et/ou l'outil étant conçus pour appliquer au moins une frappe sur la surface de la pièce à usiner, cette dernière étant positionnée sur une surface appropriée ou une table de redressement, les frappes de redressement étant contrôlées par
∘ leur emplacement (coordonnées x, y),
∘ l'orientation (angle de rotation) de l'outil, et/ou
∘ leur force,
- un modèle de prévision, qui est conçu pour prédire les changements dans la géométrie de la pièce à usiner lors d'un impact de redressement spécifique, ledit modèle de prévision étant préparé au moyen de l'intelligence artificielle ou de toute autre technique de modélisation mathématique, où le modèle de prévision est soumis à un apprentissage à l'aide de kits/systèmes d'apprentissage fournis par des expérimentations contrôlées comprenant les différents matériaux de la pièce à usiner, divers nombres de frappes, différents emplacements, forces, orientations et suites de frappes, pendant lesquelles la réponse acoustique et les changements géométriques de la pièce à usiner sont suivis ;
- un système d'optimisation pour la préparation d'une stratégie de redressement optimisée devant être réalisée par le manipulateur, l'optimisation de la stratégie de redressement cherchant à trouver au moins un nombre optimal de frappes, leur emplacement, leur enchaînement, la force de redressement et/ou la rotation de l'outil, au moyen de quoi chaque solution suggérée d'optimisation est évaluée à l'aide du modèle de prévision,
où le modèle de prévision et la stratégie de redressement optimisée constituent une partie des opérations effectuées par un ordinateur et/ou un processeur, un microcontrôleur ou un élément similaire de l'ordinateur ou du système.

2. Le système selon la revendication 1, où le système comprend en outre un appareil pour recueillir la réponse acoustique après chaque frappe de redressement, ledit appareil comprenant au moins un microphone, la réponse acoustique étant échantillonnée au moment de la frappe de redressement et facultativement au moment des frappes indicatives qui ne causent aucune déformation sur la surface de la pièce à usiner.

3. Le système selon la revendication 1 ou la revendication 2, dans lequel le modèle de prévision connecte
- les données entrantes :
∘ la forme de la pièce à usiner avant la frappe,
∘ le nombre, la force, l'emplacement, l'orientation et l'enchaînement des frappes appliquées, lesdits paramètres de frappe pouvant être modifiés entre les frappes,
∘ facultativement la réponse acoustique générée par chaque frappe,
- et les données sortantes :
∘ le changement de la géométrie de la pièce à usiner, ledit changement étant détecté par ledit appareil destiné à déterminer la géométrie de la pièce à usiner à l'aide d'un dispositif pour la prise de mesures géométriques précises, de préférence un scanner 3D.

4. Le système selon l'une quelconque des revendications précédentes, où les données pour la préparation des kits d'apprentissage pour l'apprentissage de la machine et le testage du système sont :
- Variables :
∘ modèle en 3D de la pièce à usiner avant déformation plastique de la surface provoquée par les frappes de redressement
∘ emplacements des frappes indicatives qui ne causent pas de déformation plastique de la surface,
∘ réponses acoustiques lors des frappes qui ne causent pas de déformation plastique de la surface,
∘ emplacements, orientation et force des frappes qui causent une déformation plastique de la surface,
∘ réponses acoustiques lors des frappes qui causent une déformation plastique de la surface,
- Réponses/états :
∘ modèle 3D de la pièce à usiner après chaque frappe qui déforme plastiquement sa surface.

5. Le système selon l'une quelconque des revendications précédentes, où le modèle de prévision est préparé à l'aide d'un réseau neural profond.

6. Le système selon l'une quelconque des revendications précédentes, où la stratégie de redressement est mise en œuvre à l'aide de diverses techniques d'optimisation, telles que des algorithmes évolutifs et/ou l'intelligence distribuée.

7. Le système selon l'une quelconque des revendications précédentes, où l'appareil utilisé pour la détermination de la forme de la pièce à usiner est un scanner 3D ou un profilomètre laser.

8. Le système selon l'une quelconque des revendications précédentes, où le manipulateur est un robot.

9. le système selon la revendication 2, où les signaux acoustiques pendant les frappes de redressement sont utilisés pour déterminer la géométrie de la pièce à usiner et l'appareil de captage de la réponse acoustique fonctionne comme un appareil destiné à obtenir la géométrie de la pièce à usiner.

10. Le système selon l'une quelconque des revendications précédentes, où le manipulateur est contrôlé à l'aide d'un contrôleur, d'un microcontrôleur, d'un processeur ou de tout dispositif similaire.

11. Le système selon l'une quelconque des revendications précédentes, où le manipulateur est doté d'un outil conçu pour effectuer des frappes, ledit outil étant composé de divers matériaux, ayant habituellement une dureté supérieure à celle de la pièce à usiner, et ayant toute forme adéquate, par exemple celle d'une boule ou d'un marteau.

12. Le système selon l'une quelconque des revendications précédentes, où le modèle de prévision est configuré pour fonctionner dans l'un des modes suivants :
- les frappes de redressement et la forme de la pièce à usiner avant les frappes de redressement sont des données intégrées dans le modèle de prévision pour prédire la nouvelle forme de la pièce à usiner après la frappe de redressement, ou
- les frappes de redressement, les réponses acoustiques pendant ces frappes et la forme de la pièce à usiner avant les frappes sont des données intégrées dans le modèle de prévision pour prédire la nouvelle forme de la pièce à usiner après la frappe de redressement.

13. Une méthode de redressement assisté par machine de pièces à usiner en métal durci à l'aide du système selon l'une quelconque des revendications précédentes, ladite méthode comprenant au moins les étapes suivantes :
- la détermination de la forme de la pièce à usiner et l'obtention d'informations sur le matériau de cette dernière,
- la préparation d'une stratégie de redressement optimisée à l'aide du système d'optimisation en tenant compte des informations sur le matériau et la géométrie de la pièce à usiner, où le modèle de prévision évalue les frappes proposées dans la stratégie, et où l'évaluation est répétée pour chaque frappe ou séquence de frappes, jusqu'à ce que la solution optimale ait été trouvée,
- la réalisation d'une ou de plusieurs frappes de redressement déterminées à l'étape précédente, et
- facultativement le contrôle de la forme de la pièce à usiner après la ou les frappes.

14. La méthode selon la revendication 13, dans laquelle
- en fonction de la forme de la pièce à usiner, une stratégie de redressement est préparée et exécutée intégralement, ou
- en fonction de la forme de la pièce à usiner, une stratégie de redressement est préparée, dans laquelle pendant le redressement le changement effectif de la forme après les frappes est suivi et analysé, et sur la base de ces changements, la stratégie de redressement est ajustée en temps réel.
